# EUROPÄISCHE PATENTSCHRIFT

(11) **EP 0 745 966 B1**
(45) Veröffentlichungstag und Bekanntmachung des Hinweises auf die Patenterteilung: **12.08.1998**
(21) Anmeldenummer: 96108624.6
(22) Anmeldetag: 30.05.1996
(51) Int. Cl.: G09F 9/35, G02F 1/13

(54) **Anzeigevorrichtung mit einem Lichtkasten**
Display device having a light box
Dispositif d'affichage avec boîte lumineuse

(30) Priorität: 02.06.1995 DE 19520383
(43) Veröffentlichungstag der Anmeldung: 04.12.1996
(73) Patentinhaber: SIEMENS AKTIENGESELLSCHAFT, 80333 München (DE)
(72) Erfinder: Kinzler, Hans, 93049 Regensburg (DE)

(56) Entgegenhaltungen:
- WO-A-86/00449
- DE-U- 8 632 783
- FR-A- 2 514 536
- FR-A- 2 693 019
- US-A- 5 008 658
- PATENT ABSTRACTS OF JAPAN vol. 14, no. 267 (P-1058) [4210] , 8.Juni 1990 & JP-A-02 074922 (HITACHI LTD.), 14.März 1990,

## Beschreibung

Die Erfindung geht aus von einer Anzeigevorrichtung mit einem Lichtkasten gemäß dem Oberbegriff des Anspruchs 1. Aus der Europäischen Patentschrift EP 0 239 766 B1 ist eine Anzeigevorrichtung mit einem Lichtkasten bekannt, wobei die Anzeigevorrichtung jedoch eine verhältnismäßig große Bauform aufweist und die Montage der einzelnen Teile, aus denen die Anzeigevorrichtung aufgebaut ist, verhältnismäßig aufwendig ist. Ein weiteres Beispiel aus dem Stand der Technik ist in DE-U-8 632 783 dargestellt.

Die Aufgabe der Erfindung liegt darin, eine kostengünstige Anzeigevorrichtung mit wenigen, einfach zu montierenden, Bauteilen herzustellen.

Die Aufgabe der Erfindung wird durch die Merkmale des Anspruchs 1 gelöst.

Die erfindungsgemäße Vorrichtung mit den Merkmalen des Anspruchs 1 hat demgegenüber den Vorteil, daß das Gehäuse der Anzeigevorrichtung im wesentlichen aus zwei Teilen besteht, die auf einfache Weise zu einem Gehäuse zusammengefügt werden. Dabei ist es besonders vorteilhaft, das Frontteil mit verlängerten Seitenflächen auszubilden und den Lichtkasten mit einer Abschlußplatte zu versehen, so daß der Lichtkasten in das Frontteil einschiebbar ist und das Frontteil mit den Seitenflächen und die Abschlußplatte das Gehäuse bilden.

Da der Lichtkasten bis auf die Abschlußplatte keine Gehäuseflächen aufweist, ist der Lichtkasten vor dem Einschieben in das Frontteil gut zugänglichen, so daß ohne Probleme eine automatische Vormontage von weiteren Bauteilen auf dem Lichtkasten erfolgen kann.

Durch die in den Unteransprüchen aufgeführten Maßnahmen sind vorteilhafte Weiterbildungen und Verbesserungen der im Hauptanspruch angegebenen Anzeigevorrichtung moglich. Besonders vorteilhaft ist es, die Leiterplatte im Gehäuse nahezu senkrecht zur Anzeigefläche und/oder nahezu parallel zur oberen Seitenfläche des Frontteils anzuordnen. Auf diese Weise wird ein kleine Bauform der Anzeigevorrichtung erreicht.

Ein weiterer Vorteil besteht darin, Schaltelemente, die zur Bedienung der Anzeigevorrichtung verwendet werden, auf dem Lichtkastens vorzumontieren und durch Ausnehmungen der Frontseite des Frontteils ragen zu lassen. Dadurch wird das Montageverfahren der Anzeigevorrichtung weiter vereinfacht.

Eine weitere Vereinfachung der Montage der Anzeigevorrichtung wird dadurch erreicht, daß die elektrischen Leitungen für die Lichtquelle als integrierte Leitungen in den Lichtkasten eingebracht sind und daß ein Steckeranschluß in den Lichtkasten integriert ist.

Eine kostengünstige elektrische Kontaktierung vom Steckeranschluß zur Leiterplatte wird mithilfe einer Winkelsteckerleiste erreicht, da die Winkelsteckerleiste kostengünstig ist und einfach zu montieren ist.

Eine gute Ausleuchtung der Anzeigefläche wird mit drei über die Breite der Anzeigefläche gleichmäßig verteilte Lichtquellen erreicht.

Die Erfindung wird anhand der Figuren näher erläutert; es zeigen:
Figur 1 eine Anzeigevorrichtung,
Figur 2 die Anzeigevorrichtung im Querschnitt, und
Figur 3 eine Anordnung von Lichtquellen.

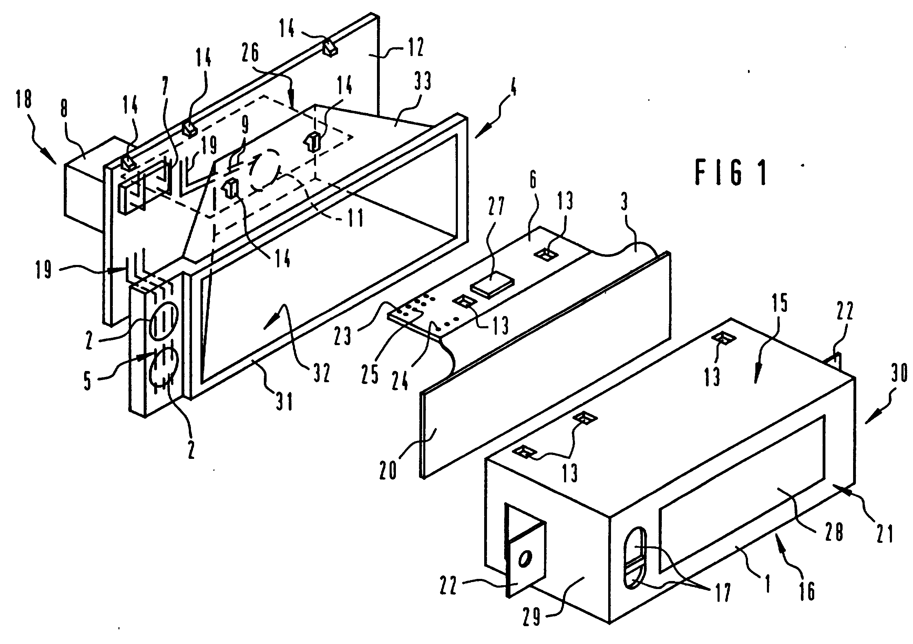

Figur 1 zeigt eine Anzeigevorrichtung vor der Montage. Ein Frontteil 1 weist eine Frontseite 21 auf, an die sich Seitenflächen 15, 16, 29, 30 im rechten Winkel zur Frontseite 21 anschließen. Die Frontseite 21 und die Seitenflächen 15, 16, 29, 30 bilden ein quaderförmiges Gehäuse, das auf einer Seite, der Rückseite, offen ist. An der Frontseite 21 sind Ausnehmungen 17 für die Durchführung von Schaltelementen 2 vorgesehen. Zudem weist die Frontseite 21 ein durchsichtiges Anzeigefenster 28 auf. An den Seitenflächen 29, 30 ist jeweils eine Verschraubungslasche 22 angeordnet. Die Verschraubungslaschen 22 werden zum Festschrauben der Anzeigevorrichtung verwendet.

In der oberen Seitenfläche 15 und in der unteren Seitenfläche 16 sind Einrastausnehmungen 13 entlang der offenen Rückseite angebracht. Die Einrastausnehmungen 13 dienen zum Befestigen von Einrastnasen 14, die am Lichtkasten 4 befestigt sind.

Figur 1 zeigt weiterhin einen Lichtkasten 4, der einen einseitig geöffneten Trichter 32 aufweist. Der Trichter 32 wird von vier Flächen gebildet, die auf eine Abschlußplatte 12 zulaufen, wobei die Abschlußplatte 12 den Trichter 32 abschließt. In Richtung auf die Abschlußplatte 12 verringern die zwei seitlichen Flächen den Abstand zueinander. Die obere Fläche 33 und die untere Fläche sind nahezu parallel zueinander geführt.

Auf der offenen Seite des Trichters 32 ist ein umlaufender Rahmen 31 ausgebildet. Der Rahmen 31 weist auf der linken Seite eine seitliche Verbreiterung auf, auf deren Vorderseite die Schaltelemente 2 und deren elektrische Leitungen 5 aufgebracht sind. Die Enden der elektrischen Leitungen 5 sind mit Kontaktstiften 19 versehen, die senkrecht zur oberen Fläche 33 nach oben ausgerichtet sind.

Auf der oberen Fläche 33 sind Einrastnasen 14 zur Halterung einer Leiterplatte 6 angeordnet. Die Abschlußplatte 12 weist an der oberen Seitenkante und an der unteren Seitenkante Einrastnasen 14 zur Befestigung des Frontteil 1 auf.

In dem Bereich der Abschlußplatte 12, der von den vier Flächen des Trichters 32 umrandet ist, ist eine Fassung 11 für den Anschluß einer Lichtquelle 10 eingebracht. Die für den elektrischen Anschluß der Lichtquelle 10 benötigten Leitungen sind als integrierte Leitungen 9 in den Trichter 32 und in die Abschlußplatte 12 eingebracht. Die Enden der integrierten Leitungen 9 ragen aus der linken, seitlichen Fläche des Trichters 32 heraus und sind mit Kontaktstiften 19 versehen, die senkrecht zur oberen Fläche 32 nach oben ausgerichtet sind.

Im linken oberen Bereich der Abschlußplatte 12 ist eine Winkelsteckerleiste 7 angeordnet, die als elektrische Leitung für einen Steckeranschluß 8 verwendet wird, der auf der Rückseite der Abschlußplatte 12 ausgebildet ist. Die freien Enden der Winkelsteckerleiste 7 ragen senkrecht zur oberen Fläche 33 nach oben und sind mit Kontaktstiften 19 versehen.

Figur 1 zeigt weiterhin eine Anzeigefläche 20, die z.B. als Flüssigkristallanzeige (LCD) ausgebildet ist, und über flexible elektrische Leitungen 3 mit der Leiterplatte 6 verbunden ist. Die Leiterplatte 6 weist Einrastausnehmungen 13 auf, die mit den Einrastnasen 14 der oberen Fläche 33 korrespondieren.

Zudem weist die Leiterplatte 6 erste Anschlußlöcher 23 für den Steckeranschluß 8, zweite Anschlußlöcher 24 für den Anschluß der integrierten Leitungen 9 und dritte Anschlußlöcher 25 für den Anschluß der elektrischen Leitung 5 auf.

Elektronischen Schaltungen, die die Leiterplatte 6 aufweist, sind schematisch in Form eines elektronischen Bauelementes 27 dargestellt. Elektrische Leitungen und elektrische oder elektronische Bauelemente, die zur Ansteuerung der Anzeigefläche 20 bzw. zum Betreiben der Schaltelemente 2 und der Lichtquelle 10 auf der Leiterplatte 6 angeordnet sind, sind nicht explizit dargestellt.

Ein wesentlicher Vorteil der erfindungsgemäßen Anzeigevorrichtung liegt darin, daß das Gehäuse der Anzeigevorrichtung im wesentlichen aus dem Lichtkasten 4 und dem Frontteil 21 besteht. Beim Montieren der Anzeigevorrichtung werden die Schaltelemente 2 mit den elektrischen Leitungen 5 auf die seitliche Verbreiterung des Rahmens 31 aufgebracht. Die Anzeigefläche 20 wird auf den Rahmen 31 aufgelegt und mithilfe von Spannklipsen am Rahmen 31 befestigt, wobei die Leiterplatte 6 auf die obere Fläche des Trichters 32 im Bereich 26 aufgelegt wird und dabei die Einrastnasen 14 der oberen Fläche in die korrespondierenden Einrastausnehmungen 13 der Leiterplatte 6 eingreifen und einrasten. Zugleich greifen die Winkelsteckerleiste 7, die Steckkontakte 19 der integrierten Leitungen 9, der elektrischen Leitungen 5 in die korrespondierenden ersten, zweiten und dritten Anschlußlöcher 23, 24, 25 der Leiterplatte 6 ein. Abschließend werden die ersten, die zweiten und die dritten Anschlußlöcher 23, 24, 25 mit den korrespondierenden Steckkontakten verlötet. Auf diese Weise wird die Leiterplatte 6 fest mit dem Lichtkasten 4 verbunden.

Der auf diese Weise vormontierte Lichtkasten 4 wird daraufhin in das Frontteil 21 von der offenen Seite her eingeschoben bis die Einrastnasen 14 der Abschlußplatte 12 in die Einrastausnehmungen 13 des Frontteils 21 eingreifen und einrasten. Auf diese Weise bilden die Abschlußplatte 12 und das Frontteil 21 ein geschlossenes Gehäuse, das mit wenigen Arbeitsschritten hergestellt wird.

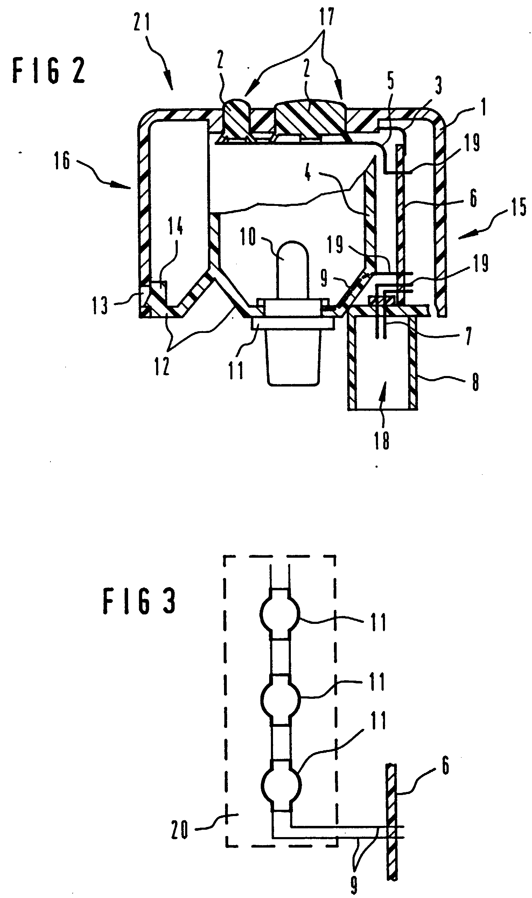

Figur 2 zeigt einen Querschnitt durch die Anzeigevorrichtung. An das Frontteil 1 schließen sich die Seitenflächen 15,16,29,30 senkrecht zum Frontteil 1 an, wobei jeweils zwei Seitenflächen 15,16 parallel zueinander ausgerichtet sind.

Im Frontteil 1 sind die Ausnehmungen 17 für die Schaltelemente 2 eingebracht, wobei die Schaltelemente aus zwei Druckknöpfen bestehen, die als eine Schaltmatte ausgebildet sind, und zwischen dem Lichtkasten 4 und dem Frontteil 1 angeordnet sind. Die Schaltelemente 2 ragen durch die ersten Ausnehmungen 17 hindurch und sind somit von der Vorderseite des Frontteils betätigbar. Die Schaltelemente 2 sind über elektrische Leitungen 5 mit der Winkelsteckerleiste 7 verbunden.

Die Anzeigefläche 20, ist zwischen dem Frontteil 1 und dem Lichtkasten 4 neben den Schaltelementen 2 angeordnet, wobei die Anzeigefläche 20 parallel zum Frontteil 1 ausgerichtet ist. Die Anzeigefläche 20 ist als Flüssigkristallanzeige, ausgebildet und von der Lichtquelle 10, von der Rückseite her beleuchtet. Die Lichtquelle 10 ist über die integrierte Leitungen 9, die in den Lichtkasten 4 eingebracht sind, mit der Leiterplatte 6 und somit mit dem Steckeranschluß 8 elektrisch verbunden. Als Lichtquelle 10 werden z.B. Glühlampen, Leuchtstoffröhren oder LED's verwendet.

Der Lichtkasten 4 ist zwischen die Seitenflächen 15,16,29,30 eingeschoben und über die Einrastnasen 14, die in die Einrastausnehmungen 13 der oberen Seitenfläche 15 eingreifen, mit dem Frontteil 1 verbunden und gegen ein Herausgleiten gesichert. In der Rückwand des Lichtkastens 4 ist die Fassung 11 für die Lichtquelle 10 eingebracht. Zudem ist an der Rückseite der Abschlußplatte 12 ein Steckeranschluß 8 ausgebildet. Der Steckeranschluß 8 weist eine nach hinten gehende zweite Ausnehmung 18 auf, die für die Aufnahme eines entsprechenden Steckers ausgebildet ist.

In der Abschlußplatte 12 sind im Bereich der zweiten Ausnehmung 18 Durchgangslöcher eingebracht, in die die Winkelsteckerleiste 7 eingesteckt ist. Die Winkelsteckerleiste weist im rechten Winkel abgeknickte Kontaktstifte 19 auf, wobei ein Ende eines Kontaktstifte 19 in die Abschlußplatte 12 eingesteckt ist und das andere Ende des Kontaktstiftes in Richtung zur oberen Seitenfläche 16 abgeknickt ist. Die Kontaktstifte 19, die in Richtung zur unteren Seitenfläche 16 abgeknickt sind, sind in die Leiterplatte 6 eingesteckt. Dabei ist die Leiterplatte 6 parallel zur oberen Seitenfläche 15 und senkrecht zum Frontteil 1 angeordnet. Die Kontaktstifte 19 dienen als elektrische Leitungen zwischen der Leiterplatte 6 und dem integrierten Steckeranschluß 18, über den die elektrische Versorgung der Leiterplatte 6, der Anzeigevorrichtung 20, der Schaltelemente 2 und der Lichtquelle 10 erfolgt.

Die Leiterplatte 6 ist über die flexiblen, elektrischen Leitungen 3, die als Heat-Seal-Connector bezeichnet werden, mit der Anzeigefläche 20 elektrisch verbunden.

Figur 3 zeigt eine bevorzugte Anordnung der Lichtquellen 10 im Lichtkasten 4. Dabei sind drei Lichtquellen 10 in einer Reihe im senkrechten Winkel und parallel zur Anzeigefläche 20 in der Abschlußplatte 12 angeordnet. Die Lichtquellen 10 sind dabei gleichmäßig über die gesamte Breite der Anzeigefläche 20, die in gestrichelten Linien schematisch dargestellt ist, verteilt, so daß eine gute Ausleuchtung der Anzeigefläche 20 erreicht wird.

## Patentansprüche

1. Anzeigevorrichtung mit einem Lichtkasten (4), mit einem Frontteil (1), mit einer zwischen dem Lichtkasten (4) und dem Frontteil (1) angeordneten Anzeigefläche (20), mit einer im Lichtkasten (4) angeordneten Lichtquelle (10), die die Anzeigefläche (20) von hinten beleuchtet, und mit einer Leiterplatte (6), die Steuerschaltungen (27) für die Anzeigefläche (20) aufweist,
**dadurch gekennzeichnet,**
- daß das Frontteil (1) eine Frontseite (21) und vier nahezu im rechten Winkel zur Frontseite (21) angeordnete Seitenflächen (15, 16,29,30) aufweist,
- daß der Lichtkasten (4) eine Abschlußfläche (12) aufweist,
- daß der Lichtkasten in das Frontteil (1) eingeschoben ist,
- und daß die Abschlußfläche (12) mit dem Frontteil (1) verbunden ist und ein Gehäuse darstellen.

2. Anzeigevorrichtung nach Anspruch 1,
**dadurch gekennzeichnet,**
daß die Leiterplatte (6) nahezu senkrecht zur Anzeigefläche (20) und/oder nahezu parallel zur oberen Seitenfläche (15) innerhalb des Gehäuses angeordnet ist.

3. Anzeigevorrichtung nach Anspruch 1 oder 2,
**dadurch gekennzeichnet,**
daß auf dem Lichtkasten (4) Schaltelemente (2) angeordnet sind, daß die Schaltelemente (2) durch Ausnehmungen (17) der Frontseite (21) des Frontteils (1) ragen, und daß die Schaltelemente (2) mit der Leiterplatte (6) elektrisch verbunden sind.

4. Anzeigevorrichtung nach einem der Ansprüche 1 bis 3,
**dadurch gekennzeichnet,**
daß die elektrischen Leitungen (9) für die Lichtquelle (10) in den Lichtkasten (4) integriert sind.

5. Anzeigevorrichtung nach einem der Ansprüche 1 bis 4,
**dadurch gekennzeichnet,**
daß ein Steckeranschluß (8) in die Abschlußfläche (12) integriert ist,
und daß der Steckeranschluß (8) über elektrische Leitungen mit der Leiterplatte (6) und/oder mit der Lichtquelle (10) verbunden ist.

6. Anzeigevorrichtung nach Anspruch 5,
**dadurch gekennzeichnet,**
daß der Steckeranschluß (8) über eine Winkelsteckerleiste (7) mit der Leiterplatte (6) verbunden ist.

7. Anzeigevorrichtung nach einem der Ansprüche 1 bis 6,
**dadurch gekennzeichnet,**
daß drei Lichtquellen (10) gleichmäßig über die Breite der Anzeigefläche (20) verteilt im Lichtkasten (4) angeordnet sind.

## Claims

1. Display device having a light box (4), a front part (1), a display face (20) which is arranged between the light box (4) and the front part (1), a light source (10) which is arranged in the light box (4) and which illuminates the display face (20) from the rear, and a circuit board (6) which has control circuits (27) for the display face (20), characterized in that
- the front part (1) has a front side (21) and four side faces (15, 16, 29, 30) arranged virtually at rightangles to the front side (21),
- the light box (4) has a terminating face (12),
- the light box is pushed into the front part (1),
- and the terminating face (12) is connected to the front part (1) and these constitute a housing.

2. Display device according to Claim 1, characterized in that the circuit board (6) is arranged within the housing virtually perpendicularly to the display face (20) and/or virtually parallel to the upper side face (15).

3. Display device according to Claim 1 or 2, characterized in that switch elements (2) are arranged on the light box (4), in that the switch elements (2) project through recesses (17) in the front side (21) of the front part (1), and in that the switch elements (2) are electrically connected to the circuit board (6).

4. Display device according to one of Claims 1 to 3, characterized in that the electrical leads (9) for the light source (10) are integrated into the light box (4).

5. Display device according to one of Claims 1 to 4, characterized in that a plug junction (8) is integrated into the terminating face (12), and in that the plug junction (8) is connected to the circuit board (6) and/or to the light source (10) via electrical leads.

6. Display device according to Claim 5, characterized in that the plug junction (8) is connected to the circuit board (6) via an angular plug strip (7).

7. Display device according to one of Claims 1 to 6, characterized in that three light sources (10) are arranged in the light box (4) so as to be distributed uniformly over the width of the display face (20).

## Revendications

1. Dispositif d'affichage comportant une boîte lumineuse (4), une pièce frontale (1), une surface d'affichage (20) disposée entre la boîte lumineuse (4) et la pièce frontale (1), une source lumineuse (10), disposée dans la boîte lumineuse (4) et éclairant depuis l'arrière la surface d'affichage (20), et une carte de circuit imprimé (6) présentant des circuits de commande (27) pour la surface d'affichage (20),
caractérisé
- en ce que la pièce frontale (1) présente une face frontale (21) et quatre faces latérales (15, 16, 29, 30) disposées sensiblement à angle droit par rapport à la face frontale (21),
- en ce que la boîte lumineuse (4) présente une plaque de fermeture (12),
- en ce que la boîte lumineuse est glissée dans la pièce frontale (1),
- et en ce que la plaque de fermeture (12) en étant reliée à la pièce frontale (1), constituent avec celle-ci un boîtier.

2. Dispositif d'affichage suivant la revendication 1, caractérisé en ce que la carte de circuit imprimé (6) est disposée à l'intérieur du boîtier, sensiblement à angle droit par rapport à la surface d'affichage (20) et/ou sensiblement parallèlement à la face latérale supérieure (15).

3. Dispositif d'affichage suivant la revendication 1 ou la revendication 2, caractérisé en ce que, sur la boîte lumineuse (4), sont disposés des éléments de commande (2), en ce que les éléments de commande (2) sortent par des ouvertures (17) de la face frontale (21) de la pièce frontale (1), et en ce que les éléments de commande (2) sont reliés électriquement au circuit imprimé (6).

4. Dispositif d'affichage suivant l'une des revendication 1 à 3, caractérisé en ce que les conducteurs électriques (9) pour la source lumineuse (10) sont intégrés dans la boîte lumineuse (4).

5. Dispositif d'affichage suivant l'une des revendications 1 à 4, caractérisé en ce qu'un raccordement à enfichage (8) est intégré dans la plaque de fermeture (12),
et en ce que le raccordement à enfichage (8) est relié par des conducteurs électriques au circuit imprimé (6) et/ou à la source lumineuse (10).

6. Dispositif d'affichage suivant la revendication 5, caractérisé en ce que le raccordement à enfichage (8) est relié au circuit imprimé (6) par l'intermédiaire d'une réglette à fiches coudées (7).

7. Dispositif d'affichage suivant l'une des revendications 1 à 6, caractérisé en ce que trois sources lumineuses (10) sont disposées dans la boîte lumineuse (4), réparties régulièrement sur la largeur de la surface d'affichage (20).
